# EUROPÄISCHE PATENTSCHRIFT

(11) **EP 2 862 758 B1**
(45) Veröffentlichungstag und Bekanntmachung des Hinweises auf die Patenterteilung: **20.07.2016**
(21) Anmeldenummer: 14002923.2
(22) Anmeldetag: 22.08.2014
(51) Int. Cl.: B60R 21/38

(54) **Verstellvorrichtung für eine Frontklappe**
Adjusting device for a front flap
Dispositif de réglage pour un volet avant

(30) Priorität: 21.10.2013 DE 102013017475
(43) Veröffentlichungstag der Anmeldung: 22.04.2015
(73) Patentinhaber: AUDI AG, 85045 Ingolstadt (DE)
(72) Erfinder: Kugler, Peter, 49186 Bad Iburg (DE); Dorfner, Wolfgang, DE - 85114 Buxheim (DE); Sternecker, Harald, DE - 92339 Beilngries (DE); Pfaller, Bernhard-Konrad, DE - 85095 Denkendorf (DE); Schindler, Manfred, DE - 85570 Markt Schwaben (DE)
(74) Vertreter: Mader, Wilfried

(56) Entgegenhaltungen:
- DE-A1-102007 056 277
- DE-A1-102008 057 880
- DE-U1-202013 101 518
- US-B1- 6 415 882

## Beschreibung

Die Erfindung betrifft eine Verstellvorrichtung für eine Frontklappe mit einem Aktuator zum Anheben der Hinterkante der Frontklappe, wobei die Vorstellvorrichtung einen frontklappenfesten Schenkel mit einer Führung aufweist, sowie ein karosseriefestes Haltelement mit einem in der Führung geführten Abschnitt, wobei die Führung des frontklappenfesten Schenkels bezüglich des Abschnitts des Halteelements durch den Aktuator zum Anheben der Hinterkante der Frontklappe bewegbar ist.

Es ist bereits bekannt, bei derartigen Frontklappen einen Antrieb vorzusehen, um die Frontklappe in bestimmten Situationen verstellen zu können. Zum Schutz von Fußgängern kann eine Frontklappe nach der Detektion eines Aufpralls aktiv angehoben werden, damit ein Teil der Aufprallenergie durch Deformation der Frontklappe aufgenommen werden kann. Derartige aktive Frontklappen werden zumeist vertikal nach oben und zusätzlich horizontal nach hinten verschoben. Wenn die Klappe hingegen nicht angehoben wird, steht wegen der steifen Unterstruktur des Fahrzeugs zumeist kein ausreichender Verformungsraum zur Verfügung.

In der DE 10 2005 057 627 A1 wird eine Auslösevorrichtung für eine Motorhauben-Hebevorrichtung beschrieben. Dort ist eine als Spiralfeder ausgebildete Kraftspeichereinrichtung vorgesehen, die durch einen Elektromotor gespannt und im Falle einer Kollision ausgelöst werden kann, wodurch die Motorhaube angehoben wird.

Eine ähnliche Anordnung ist aus der DE 201 06 478 U1 bekannt. Dort ist vorgesehen, dass die Motorhaube bei einer Kollision durch die in einem Kraftspeicher gespeicherte Energie angehoben werden kann, wobei der Kraftspeicher über ein Untersetzungsgetriebe von einem Elektromotor antreibbar ist.

In der DE 199 45 755 A1 wird eine Scharnieranordnung für eine Klappe eines Kraftfahrzeugs vorgeschlagen, die als Vielgelenkscharnier ausgebildet ist. Die Klappe und die Karosserie sind über zwei gelenkig angebrachte Träger miteinander verbunden, einer der Träger wird karosserieseitig durch einen Drehantrieb bewegt, wodurch die Klappe geöffnet oder geschlossen werden kann.

In der EP 1258402 A2 wird eine Vorrichtung zum Öffnen der Haube eines Kraftfahrzeugs beschrieben, die einen Elektromotor aufweist, um die Haube anzuheben und zurück in die Schließstellung zu bringen. Der Motor ist mit einer Antriebseinheit verbunden, die als Kurbeltrieb ausgebildet ist.

Aus der US 6 415 882 B1 ist eine Verstellvorrichtung für eine Frontklappe mit einem Aktuator zum Anheben der Hinterkante der Frontklappe nach dem Oberbegriff von Anspruch 1 bekannt. Die Verstellvorrichtung weist einen frontklappenfesten Schenkel mit einer Führung auf, sowie ein karosseriefestes Halteelement mit einem in der Führung geführten Abschnitt, wobei die Führung des frontklappenfesten Schenkels bezüglich des Abschnitts des Halteelements, durch den Aktuator zum Anheben der Hinterkante der Frontklappe, bewegbar ist.

Daneben ist aus DE 10 2007 056 277 A1 ein Scharnier für eine Frontklappe eines Kraftfahrzeugs bekannt, welches einen karosseriefesten Befestigungsabschnitt zur Befestigung des Scharniers an der Karosserie, einen klappenseitigen Befestigungsabschnitt zur Befestigung des Scharniers an der Frontklappe und einen Aktuator aufweist, der das Scharnier betätigt, wodurch die Frontklappe in einen aufgestellten Zustand versetzt wird. Das Scharnier weist einen Führungsabschnitt auf, der an dem klappenseitigen Befestigungsabschnitt befestigt ist und in den karosserieseitigen Befestigungsabschnitt gleitend verschiebbar eingesetzt ist.

Der Erfindung liegt die Aufgabe zugrunde, eine Verstellvorrichtung anzugeben, die erweiterte Verstellmöglichkeiten bietet.

Zur Lösung dieser Aufgabe ist bei einer Verstellvorrichtung der eingangs genannten Art erfindungsgemäß vorgesehen, dass der Aktuator einen ersten karosseriefesten Drehantrieb mit einem drehbaren Schenkel aufweist, der gelenkig mit einem ersten an der Frontklappe befestigten Hebel gekoppelt ist, sowie einen zweiten karosseriefesten Drehantrieb mit einem drehbaren Schenkel, der gelenkig mit einem zweiten an der Frontklappe befestigten Hebel gekoppelt ist.

Bei der erfindungsgemäßen Verstellvorrichtung ist das karosseriefeste Halteelement vorgesehen, das einen in der Führung geführten Abschnitt aufweist. Das karosseriefeste Haltelement ist fest mit der Karosserie verbunden. An der Frontklappe ist ein Schenkel angeordnet, der eine Führung aufweist, die mit dem Abschnitt des karosseriefesten Halteelements zusammenwirkt. Der frontklappenfeste Schenkel ist gemeinsam mit der Führung durch den Aktuator bewegbar, wodurch die Hinterkante der Frontklappe bewegt, insbesondere angehoben werden kann. Durch den in der Führung geführten Abschnitt ist ein besonders guter Halt der Frontklappe gewährleistet.

Eine noch höhere Zuverlässigkeit ergibt sich bei der erfindungsgemäßen Verstellvorrichtung, wenn der Abschnitt des karosseriefesten Halteelements entlang der Führung zwischen zwei gegenüberliegenden Anschlägen bewegbar ist. Die beiden Anschläge bilden somit jeweils eine Begrenzung für die Bewegung der Frontklappe relativ zur Karosserie des Kraftfahrzeugs.

In weiterer Ausgestaltung der Erfindung kann es vorgesehen sein, dass der in der Führung geführte Abschnitt des karosseriefesten Halteelements einen Bolzen umfasst, der eine Drehachse zum Schwenken der Frontklappe bildet. Dieser Bolzen kann auf diese Weise eine Drehachse für die Bewegung der Frontklappe bilden, nicht nur um durch Anheben der Frontklappe einen verbesserten Fußgängerschutz zu bieten, sondern auch beim Schwenken der Frontklappe in eine Wartungsstellung. Die Schwenkbewegung wird dabei durch eine Betätigung des Aktuators ausgelöst, wodurch die Frontklappe um den Bolzen, der die Drehachse bildet, geschwenkt wird.

Die erfindungsgemäße Verstellvorrichtung sieht vor, dass der Aktuator einen ersten karosseriefesten Drehantrieb mit einem drehbaren Schenkel aufweist, der gelenkig mit einem ersten an der Frontklappe befestigten Hebel gekoppelt ist, sowie einem zweiten karosseriefesten Drehantrieb mit einem drehbaren Schenkel, der gelenkig mit einem zweiten an der Frontklappe befestigten Hebel gekoppelt ist. Durch das Vorsehen von zwei Drehantrieben ergeben sich erweiterte Verstellmöglichkeiten beim Anheben und Bewegen der Frontklappe. Insbesondere wird durch zwei Drehantriebe ein größerer Bewegungsbereich geschaffen, der mit einem einzigen Drehantrieb nicht realisiert werden könnte.

Bei der erfindungsgemäßen Verstellvorrichtung wird es bevorzugt, dass die beiden Hebel an einem gemeinsamen Befestigungspunkt der Frontklappe gelenkig angebracht sind. Eine derartige Ausgestaltung ist im Hinblick auf den benötigten Einbauraum vorteilhaft.

In diesem Zusammenhang wird es bei der erfindungsgemäßen Verstellvorrichtung bevorzugt, dass ein Drehantrieb derart angeordnet ist, dass die Frontklappe dadurch überwiegend vertikal bewegbar ist und der andere Drehantrieb derart angeordnet ist, dass die Frontklappe dadurch überwiegend horizontal bewegbar ist. Es ist nicht erforderlich, dass die Drehantriebe jeweils eine exakt horizontale bzw. vertikale Bewegung bewirken, die Bewegungsrichtungen sind dabei lediglich näherungsweise horizontal bzw. vertikal.

Eine besonderes zuverlässige Funktion ergibt sich bei der erfindungsgemäßen Verstellvorrichtung, wenn sie eine Steuerungseinrichtung aufweist oder damit verbindbar oder verbunden ist, die zum koordinierten Steuern des ersten und des zweiten Drehantriebs ausgebildet ist. Wenn die erfindungsgemäße Verstellvorrichtung die beiden unabhängig voneinander betätigbaren Drehantriebe aufweist, können durch eine entsprechende Ansteuerung der Drehantriebe durch die Steuerungseinrichtung unterschiedliche Bewegungen der Frontklappe realisiert werden, die gegenüber der Fahrzeugkarosserie bewegbar ist. Beispielsweise kann lediglich die Hinterkante der Frontklappe angehoben werden. Zusätzlich kann die Frontklappe auch horizontal verschoben werden, indem beide Drehantriebe entsprechend angesteuert werden. Darüber hinaus kann die Frontklappe aus einer eingefahrenen, geschlossenen Stellung auch in eine Wartungsstellung bewegt werden, in der der in der Führung geführte Abschnitt des karosseriefesten Halteelements, insbesondere der Bolzen, eine Drehachse zum Schwenken der Frontklappe in die Wartungsstellung bildet. Die erfindungsgemäße Verstellvorrichtung umfasst dabei vorzugsweise eine Steuerungseinrichtung, die dazu ausgebildet ist, die Drehantriebe so anzusteuern, dass die Hinterkante der Frontklappe in eine erhöhte und nach vorne oder hinten verschobene Fußgängerschutzstellung oder in eine weiter erhöhte und weiter nach hinten verschobene Typschadenstellung bewegbar ist, sowie in die bereits erwähnte Wartungsstellung.

Aus Sicherheitsgründen kann es vorgesehen sein, dass die Verstellvorrichtung eine der Frontklappe zugeordnete Verriegelung aufweist, die im entriegelten Zustand eine Bewegung der Frontklappe ermöglicht. Bei dieser Ausgestaltung wird in dem Fall, wenn die Frontklappe aus dem eingefahrenen Zustand bewegt werden soll, zunächst die Verriegelung entriegelt, die die Frontklappe im verriegelten Zustand an einer Bewegung hindert. Die Verriegelung kann dazu elektrisch betätigbar sein, wodurch bei einer erfassten oder bevorstehenden Kollision eine schnelle Entriegelung möglich ist.

Daneben betrifft die Erfindung ein Kraftfahrzeug. Das erfindungsgemäße Kraftfahrzeug zeichnet sich dadurch aus, dass es wenigstens eine Verstellvorrichtung der beschriebenen Art aufweist. Vorzugsweise weist das erfindungsgemäße Kraftfahrzeuge zwei derartige Verstellvorrichtungen auf, die an gegenüberliegenden Seiten im Motorraum des Kraftfahrzeugs angeordnet sind.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: eine Seitenansicht einer im Motorraum eines Kraftfahrzeugs angeordneten erfindungsgemäßen Verstellvorrichtung;
- Fig. 2: eine Darstellung desselben Ausschnitts des Kraftfahrzeugs wie in Fig. 1 von außen gesehen;
- Fig. 3: eine ähnliche Seitenansicht der Verstellvorrichtung wie in Fig. 1;
- Fig. 4: eine ähnliche Darstellung der Frontklappe wie in Fig. 2 in einer Seitenansicht;
- Fig. 5: die durch die Verstellvorrichtung in eine Wartungsstellung bewegte Frontklappe; und
- Fig. 6: eine perspektivische Ansicht der erfindungsgemäßen Verstellvorrichtung.

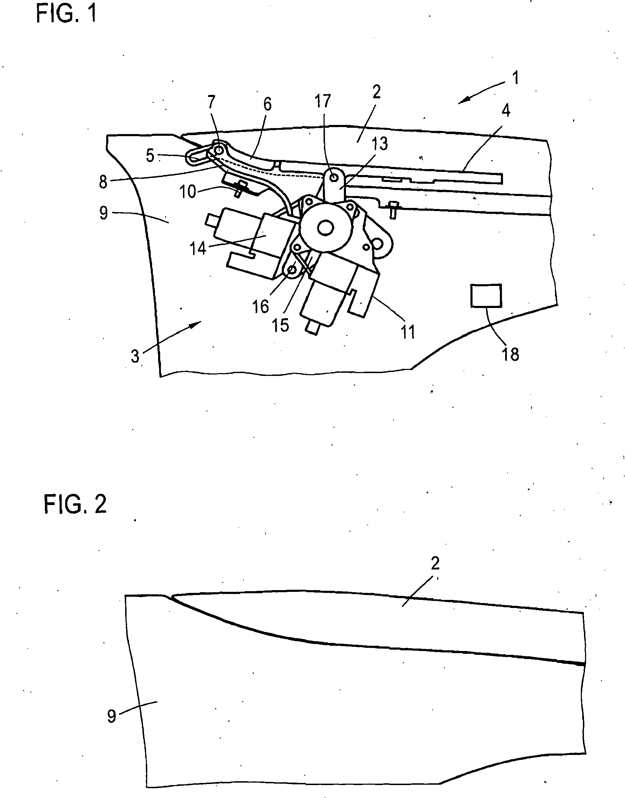

Fig. 1 ist eine Seitenansicht und zeigt die wesentlichen Komponenten einer Verstellvorrichtung 1, die im Motorraum eines Kraftfahrzeugs angeordnet ist. In dem Motorraum sind zwei derartige Verstellvorrichtungen 1 an gegenüberliegenden Seiten angeordnet, von denen in Fig. 1 eine sichtbar ist. Fig. 1 zeigt einen Teil des Motorraums eines Kraftfahrzeugs, wobei sich das Fahrzeugheck in der in Fig. 1 gezeigten Ansicht links und die Fahrzeugfront rechts befindet.

Die Verstellvorrichtung 1 dient zum Anheben der Frontklappe 2 und weist dazu einen Aktuator 3 auf. Die Verstellvorrichtung 1 umfasst einen frontklappenfesten Schenkel 4, der an der Unterseite der Frontklappe 2 fest angebracht ist. In Fig. 1 erkennt man, dass der Schenkel 4 an seinem hinteren Ende eine Führung 5 aufweist, die als längliche Ausnehmung ausgebildet ist. Das hintere Ende 6 des frontklappenfesten Schenkels 4 weist eine leicht nach oben gebogene Form auf, daran schließt sich die die Ausnehmung aufweisende Führung 5 an, die wiederum schräg nach unten und hinten verläuft. In der Führung 5 ist ein Bolzen 7 eines karosseriefesten Halteelements 8 geführt. In Fig. 1 ist dargestellt, dass das karosseriefeste Halteelement 8 mittels Schrauben 10 mit der Karosserie 9 verbunden ist. Der Bolzen 7, der Bestandteil des karosseriefesten Halteelements 8 ist, bildet einen Drehpunkt bzw. eine Drehachse für eine Bewegung der Frontklappe 2. In der in der Fig. 1 gezeigten Ansicht befindet sich die Frontklappe 2 in einer eingefahrenen und geschlossenen Stellung. In dieser Stellung liegt der Bolzen 7 an dem in Fig. 1 rechten Ende der Ausnehmung der Führung 5 des frontklappenfesten Schenkels 4 an. Da der Bolzen 7 an einem Ende der Führung 5 anliegt, das einen Anschlag bildet, wird eine exakte Positionierung der Frontklappe 2 gewährleistet.

Der Aktuator 3 der Verstellvorrichtung 1 umfasst einen ersten karosseriefesten Drehantrieb 11 mit einem drehbaren Schenkel 12, der in der Ansicht von Fig. 1 allerdings durch den Drehantrieb 11 verdeckt ist. Der Schenkel 12 ist mit einem ersten an der Frontklappe 2 befestigten Hebel 13 gekoppelt. Daneben umfasst der Aktuator 3 einen zweiten karosseriefesten Drehantrieb 14 mit einem drehbaren Schenkel 15, der in Fig. 1 weitgehend von dem Drehantrieb 11 verdeckt ist. Der drehbare Schenkel 15 ist gelenkig mit einem zweiten an der Frontklappe 2 befestigten Hebel 16 gekoppelt. Die beiden Drehantriebe 11, 14 weisen somit einen weitestgehend identischen Aufbau auf. An jedem Drehantrieb ist ein drehfester Schenkel 12, 15 angebracht, der beim Einschalten des Drehantriebs 11, 14 gedreht wird, an dem freien Ende der Schenkel 12, 15 ist jeweils Hebel 13, 16 gelenkig angebracht, dessen anderes Ende gelenkig an einem Befestigungspunkt 17 des frontklappenfesten Schenkels 4 angebracht ist. Beide Hebel 13, 16 weisen somit einen gemeinsamen Befestigungspunkt 17 auf. In Fig. 1 erkennt man, dass der Drehantrieb 11 so angebracht ist, dass er beim Einschalten eine im wesentlichen vertikale Bewegung der Frontklappe 2 auslöst, da der Hebel 13 dann im wesentlichen vertikal bewegbar ist. Andererseits ist der Drehantrieb 14 so angeordnet, dass er beim Einschalten eine überwiegend horizontale Bewegung ausführt, wodurch die Frontklappe 2 horizontal bewegbar ist.

Fig. 2 zeigt denselben Ausschnitt des Kraftfahrzeugs wie Fig. 1 im Bereich des hinteren Endes der Frontklappe 2 in einer Seitenansicht von außen.

Das Kraftfahrzeug weist Umfeldsensoren auf, durch die ein Fußgänger, der mit dem Fahrzeug kollidieren könnte, erfasst werden kann. Zusätzlich sind an der Fahrzeugfront Sensoren vorgesehen, durch die ein aktuell stattfindender Aufprall eines Fußgängers erkannt werden kann. Wenn eine Kollision mit einem Fußgänger nicht mehr durch andere Manöver, zum Beispiel einen Bremsvorgang verhindert werden kann, kann die Frontklappe 2 in eine sogenannte Fußgängerschutzstellung bewegt werden. Dazu wird die Frontklappe 2 angehoben, so dass zwischen der Frontklappe 2 und dem Motorraum ein Freiraum gebildet wird, der als Deformationsbereich bei einem Aufprall des Fußgängers zur Verfügung steht. Auf diese Weise können schwere Verletzungen des Fußgängers häufig vermieden oder zumindest signifikant verringert werden.

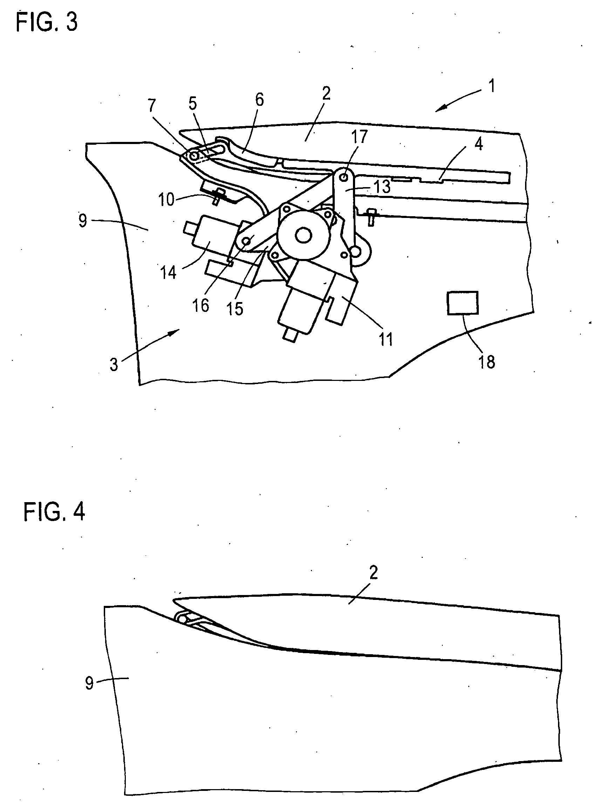

Fig. 3 ist eine ähnliche Seitenansicht wie Fig. 1 und zeigt die Verstellvorrichtung 1, nachdem diese die Frontklappe 2 in die Fußgängerschutzstellung gebracht hat. Ausgehend von der in Fig. 1 gezeigten Position wird dazu der Aktuator 3 betätigt, so dass die beiden Drehantriebe 11, 14 den jeweiligen Schenkel 12, 15 drehen, wodurch die mit den Schenkeln 12, 15 gekoppelten Hebel 13, 16 bewegt werden. Da beide Hebel 13, 16 mit ihren Enden an dem frontklappenfesten Schenkel 4 befestigt sind, wird die Frontklappe 2 vertikal und horizontal verschoben, bis die in Fig. 3 gezeigte Position erreicht ist. Vergleicht man die Fig. 1 und 3 miteinander, so erkennt man, dass die Frontklappe 2 aus ihrer Ruhestellung vertikal nach oben und geringfügig nach vorne verschoben wurde. Die vertikale Bewegung wird dabei im wesentlichen durch den Drehantrieb 11 bewirkt, die horizontale Verschiebung im wesentlichen durch den anderen Drehantrieb 14. Um Zwangskräfte zu vermeiden, ist es erforderlich, dass beide Drehantriebe 11, 14 koordiniert gesteuert werden, dazu umfasst die Verstellvorrichtung 1 eine Steuerungseinrichtung 18, die lediglich schematisch dargestellt ist und über nicht dargestellte Leitungsverbindungen mit den Drehantrieben 11, 14 verbunden ist. Die Steuerungseinrichtung 18 erhält bei Bedarf von anderen im Kraftfahrzeug verbauten Sicherheitssystemen ein Signal, um die Frontklappe 2 in die Fußgängerschutzstellung zu bewegen. In diesem Fall steuert die Steuerungseinrichtung 18 die beiden Drehantriebe 11, 14 koordiniert an, so dass die Frontklappe 2 aus der in Fig. 1 gezeigten eingefahrenen Stellung in die vertikal nach oben und horizontal zumindest geringfügig nach vorne verschobene Stellung bewegt wird. Die beiden Drehantriebe 11, 14 können dabei nacheinander oder abwechselnd oder gleichzeitig betätigt, das heißt, eingeschaltet werden. Auf diese Weise können neben der erwähnten Fußgängerschutzstellung auch andere Positionen der Frontklappe 2 angefahren werden.

Fig. 4 ist eine ähnliche Darstellung wie Fig. 2 und zeigt die in die Fußgängerschutzstellung bewegte Frontklappe 2 in einer Seitenansicht.

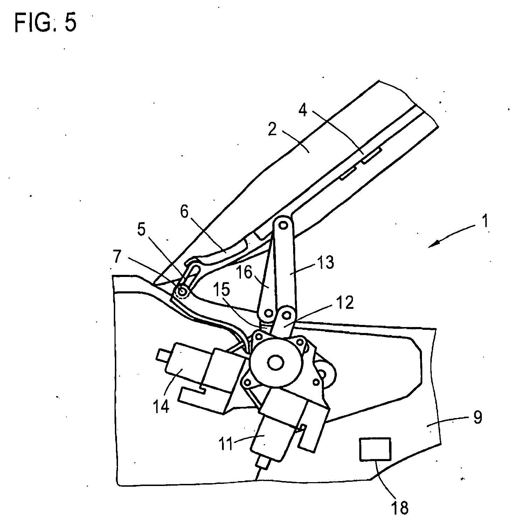

Fig. 5 ist eine Seitenansicht und zeigt die Verstellvorrichtung 1, nachdem die Frontklappe 2 in eine Wartungsstellung bewegt worden ist. In Fig. 5 ist auch der an dem Drehantrieb 11 drehfest befestigte Schenkel 12 sichtbar. Beide Schenkel 12, 15 und die Hebel 13, 16 sind jeweils in ihre höchste vertikale Position geschwenkt worden, so dass die Frontklappe 2 maximal geöffnet ist. Beim Schwenken der Frontklappe 2 dreht diese um den Bolzen 7, der eine Drehachse bildet.

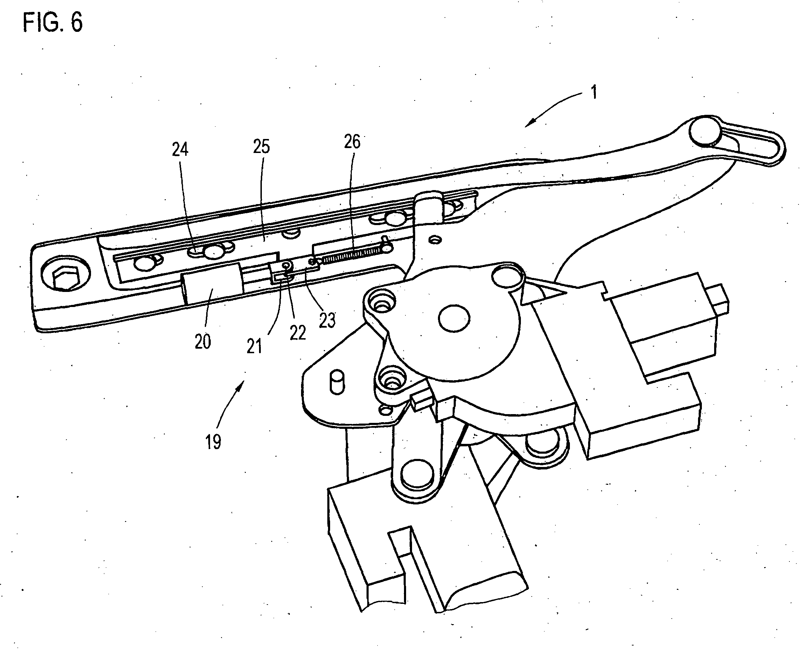

Fig. 6 ist eine perspektivische Ansicht der Verstellvorrichtung 1. Die Verstellvorrichtung 1 umfasst eine Verriegelung 19, deren Aufbau und Funktion anhand von Fig. 6 erläutert wird. Die Verriegelung 19 umfasst einen linear bewegbaren Schieber 20, der als Linearaktor ausgebildet ist und eine Gabel 21 aufweist. Die Gabel 21 ist über einen Stift 22 mit einer abgewinkelten Lasche 23 verbunden. Die Lasche 23 ist Bestandteil eines Ausnehmungen 24 aufweisenden Blechs 25. Durch eine Betätigung des Schiebers 20 wird das Blech 25 linear verschoben, dadurch wird die Frontklappe 2 entriegelt, so dass diese angehoben werden kann. Nach dem Ausschalten des elektrisch angetriebenen Schiebers 20 wird das Blech 25 durch die Kraft einer Spiralfeder 26 wieder zurück in ihre Ausgangsposition bewegt.

## Patentansprüche

1. Verstellvorrichtung (1) für eine Frontklappe (2) mit einem Aktuator (3) zum Anheben der Hinterkante der Frontklappe (2), wobei die Verstellvorrichtung (1) einen frontklappenfesten Schenkel (4) mit einer Führung (5) aufweist, sowie ein karosseriefestes Halteelement (8) mit einem in der Führung (5) geführten Abschnitt, wobei die Führung (5) des front-klappenfesten Schenkels (4) bezüglich des Abschnitts des Halteelements (8) durch den Aktuator (3) zum Anheben der Hinterkante der Frontklappe (2) bewegbar ist,
**dadurch gekennzeichnet,**
**dass** der Aktuator (3) einen ersten karosseriefesten Drehantrieb (11) mit einem drehbaren Schenkel (12) aufweist, der gelenkig mit einem ersten an der Frontklappe (2) befestigten Hebel (13) gekoppelt ist, sowie einen zweiten karosseriefesten Drehantrieb (14) mit einem drehbaren Schenkel (15), der gelenkig mit einem zweiten an der Frontklappe (2) befestigten Hebel (16) gekoppelt ist.

2. Verstellvorrichtung nach Anspruch 1,
**dadurch gekennzeichnet,**
**dass** der Abschnitt des Halteelements (8) entlang der Führung (5) zwischen zwei gegenüberliegenden Anschlägen bewegbar ist.

3. Verstellvorrichtung nach Anspruch 1 oder 2,
**dadurch gekennzeichnet,**
**dass** der in der Führung (5) geführte Abschnitt des karosseriefesten Halteelements (8) einen Bolzen (7) umfasst, der eine Drehachse zum Schwenken der Frontklappe (2) bildet.

4. Verstellvorrichtung nach einem der vorangehenden Ansprüche,
**dadurch gekennzeichnet,**
**dass** die beiden Hebel (13, 16) an einem gemeinsamen Befestigungspunkt (17) der Frontklappe (2) gelenkig angebracht sind.

5. Verstellvorrichtung nach einem der vorangehenden Ansprüche,
**dadurch gekennzeichnet,**
**dass** ein Drehantrieb (11) derart angeordnet ist, dass die Frontklappe (2) dadurch überwiegend vertikal bewegbar ist und der andere Drehantrieb (14) derart angeordnet ist, dass die Frontklappe (2) dadurch uberwiegend horizontal bewegbar ist.

6. Verstellvorrichtung nach einem der vorangehenden Ansprüche, **dadurch gekennzeichnet,**
**dass** sie eine Steuerungseinrichtung (18) aufweist oder damit verbindbar oder verbunden ist, die zum koordinierten Steuern des ersten und des zweiten Drehantriebs (11, 14) ausgebildet ist.

7. Verstellvorrichtung nach Anspruch 6,
**dadurch gekennzeichnet,**
**dass** die Steuerungseinrichtung (18) dazu ausgebildet ist, die Drehantriebe (11, 14) so anzusteuern, dass die Hinterkante der Frontklappe (2) in eine erhöhte und horizontal verschobene Fußgängerschutzstellung oder in eine weiter erhöhte und weiter nach hinten verschobene Typschadenstellung bewegbar ist.

8. Verstellvorrichtung nach einem der vorangehenden Ansprüche,
**dadurch gekennzeichnet,**
**dass** sie eine der Frontklappe (2) zugeordnete Verriegelung (19) aufweist, die im entriegelten Zustand eine Bewegung der Frontklappe (2) ermöglicht.

9. Kraftfahrzeug,
**dadurch gekennzeichnet,**
**dass** es wenigstens eine Verstellvorrichtung (1) nach einem der Ansprüche 1 bis 8 aufweist.

## Claims

1. Adjustment device (1) for a bonnet (2) with an actuator (3) for raising the rear edge of the bonnet (2), wherein the adjustment device (1) comprises a leg (4), with a guide (5), firmly fixed to the bonnet as well as a holding element (8) which is firmly attached to the vehicle body with a section guided in the guide (5), wherein the guide (5) of the leg (4) firmly fixed to the bonnet can by moved with regard to the section of the holding element (8) by the actuator (3) for raising the rear edge of the bonnet (2),
**characterised in that**
the actuator (3) comprises a first rotating drive (11) which is fixed to the vehicle body and has a rotating leg (12) which is connected in an articulated manner to a first lever (13) attached to the bonnet (2), as well as second rotating drive (14) with a rotating leg (15) which is connected in an articulating manner to a second lever (16) fastened to the bonnet (2).

2. Adjustment device according to claim 1
**characterised in that** the section of the holding element (8) can be moved along the guide (5) between two stops that are opposite to each other.

3. Adjustment device according to claim 1 or 2
**characterised in that** the section of the holding element (8) firmly fixed to the vehicle body and guided in the guide (5) has a bolt (7) which forms an axis of rotation for pivoting the bonnet (2).

4. Adjustment device according to any one of the preceding claims
**characterised in that**
both levers (13, 16) are connected in an articulated manner to a joint fastening point (17) of the bonnet (2).

5. Adjustment device according to any one of the preceding claims
**characterised in that**
one rotating drive (11) is arranged in such a way that the bonnet (2) can thereby predominantly be moved vertically and the other rotating drive (14) is arranged in such a way that the bonnet (2) is predominantly moved horizontally by it.

6. Adjustment device according to any one of the preceding claims
**characterised in that**
it comprises a control device (18), or can be or is connected thereto, which is designed for the coordinated control of the first and the second rotating drive (11, 14).

7. Adjustment device according to claim 6
**characterised in that**
the control device (18) is designed to control the rotating drives (11, 14) in such a way that the rear edge of the bonnet (2) can be moved into an elevated and horizontally displaced pedestrian protection position or into a further elevated rearwardly displaced typical accident damage position.

8. Adjustment device according to any one of the preceding claims
**characterised in that**
it comprises a lock (19) assigned to the bonnet (2) which when unlocked allows movement of the bonnet (2).

9. Motor vehicle
**characterised in that**
it comprises at least one adjustment device (1) according to any one of claims 1 to 8.

## Revendications

1. Dispositif de réglage (1) pour un volet avant (2) comprenant un actionneur (3) servant à relever le bord arrière du volet avant (2), dans lequel le dispositif de réglage (1) présente une branche (4) solidaire du volet avant, pourvu d'un guidage (5), ainsi qu'un élément de maintien (8) solidaire de la carrosserie, pourvu d'un segment guidé dans le guidage (5), dans lequel le guidage (5) de la branche (4) solidaire du volet avant peut être déplacé par rapport au segment de l'élément de maintien (8) par l'actionneur (3) afin de relever le bord arrière du volet avant (2),
**caractérisé en ce**
**que** l'actionneur (3) présente un entraînement rotatif (11) solidaire de la carrosserie, pourvu d'une branche (12) pouvant tourner, laquelle est couplée de manière articulée à un premier levier (13) fixé au niveau du volet avant (2), ainsi qu'un deuxième entraînement rotatif (14) solidaire de la carrosserie, pourvu d'une branche (15) pouvant tourner, qui est couplée de manière articulée à un deuxième levier (16) fixé au niveau du volet avant (2).

2. Dispositif de réglage selon la revendication 1,
**caractérisé en ce**
**que** le segment de l'élément de maintien (8) peut être déplacé le long du guidage (5) entre deux butées se faisant face.

3. Dispositif de réglage selon la revendication 1 ou 2,
**caractérisé en ce**
**que** le segment, guidé dans le guidage (5), de l'élément de maintien (8) solidaire de la carrosserie présente un axe (7) qui forme un axe de rotation servant à faire pivoter le volet avant (2).

4. Dispositif de réglage selon l'une quelconque des revendications précédentes,
**caractérisé en ce**
**que** les deux leviers (13, 16) sont installés de manière articulée au niveau d'un point de fixation (17) commun du volet avant (2).

5. Dispositif de réglage selon l'une quelconque des revendications précédentes,
**caractérisé en ce**
**qu'**un entraînement rotatif (11) est disposé de telle manière que le volet avant (2) peut être déplacé de ce fait majoritairement de manière verticale, et en ce que l'autre entraînement rotatif (14) est disposé de telle manière que le volet avant (2) peut être déplacé de ce fait majoritairement de manière horizontale.

6. Dispositif de réglage selon l'une quelconque des revendications précédentes,
**caractérisé en ce**
**qu'**il présente un système de commande (18) ou peut être relié ou est relié à ce dernier, lequel est réalisé afin de commander de manière coordonnée le premier et le deuxième entraînement rotatif (11, 14).

7. Dispositif de réglage selon la revendication 6,
**caractérisé en ce**
**que** le dispositif de commande (18) est réalisé afin de piloter les entraînements rotatifs (11, 14) de telle sorte que le bord arrière du volet avant (2) peut être déplacé dans une position de protection de piéton élevée et coulissée de manière horizontale ou dans une position de dommage typique davantage élevée et davantage coulissée vers l'arrière.

8. Dispositif de réglage selon l'une quelconque des revendications précédentes,
**caractérisé en ce**
**qu'**il présente un verrouillage (19) associé au volet avant (2), lequel permet, dans l'état déverrouillé, un déplacement du volet avant (2).

9. Véhicule,
**caractérisé en ce**
**qu'**il présente au moins un dispositif de réglage (1) selon l'une quelconque des revendications 1 à 8.
